# EUROPÄISCHE PATENTANMELDUNG

(11) **EP 0 974 492 A2**
(43) Veröffentlichungstag der Anmeldung: **26.01.2000**
(21) Anmeldenummer: 99112207.8
(22) Anmeldetag: 25.06.1999
(51) Int. Cl.: B60R 16/02, H02J 7/14, H02P 9/48, H02K 7/18

(54) **Energieversorgungseinrichtung für eine elektromagnetische Ventilsteuerung einer Brennkraftmaschine**

(30) Priorität: 22.07.1998 DE 19832874
(71) Anmelder: DaimlerChrysler AG, 70567 Stuttgart (DE)
(72) Erfinder: Blümel, Roland, Dr., 70599 Plieningen (DE); Gross, Christof, 70327 Stuttgart (DE)

(57) **Zusammenfassung**

Die Erfindung bezieht sich auf eine Energieversorgungseinrichtung für eine elektromagnetische Ventilsteuerung einer Brennkraftmaschine, insbesondere eines Kraftfahrzeugs, mit einem mechanisch mit der Brennkraftmaschine koppelbaren Generator, einer dem Generator zugeordneten Gleichrichterschaltung, die eine erste Diodenanordnung als Anodenteil und eine zweite Diodenanordnung als Kathodenteil umfaßt und mit der ein Versorgungsausgang verbunden ist, und einem elektrischen Energiespeicher.

Erfindungsgemäß ist der elektrische Energiespeicher mit dem Ausgang der dritten Diodenanordnung verbunden, und die Energieversorgungseinrichtung weist einen steuerbaren DC/DC-Wandler auf, der einerseits mit der dritten Diodenanordnung und andererseits an den Versorgungsausgang angeschlossen ist. Alternativ zur dritten Diodenanordnung kann der DC/DC-Wandler parallel zu einem Spannungsregler und einer Diode an die erste Diodenanordnung angekoppelt sein.

Verwendung z.B. in Kraftfahrzeugen.

## Beschreibung

Die Erfindung betrifft eine Energieversorgungseinrichtung für eine elektromagnetische Ventilsteuerung einer Brennkraftmaschine gemäß dem Oberbegriff des Anspruchs 1 oder 4.

Eine derartige Energieversorgungseinrichtung dient zur Speisung der elektromagnetischen Ventilsteuerung einer Brennkraftmaschine eines Kraftfahrzeuges mit elektrischer Energie über den gesamten Drehzahlbereich hinweg einschließlich dem Startvorgang. Eine elektromagnetische Ventilsteuerung erfordert eine in etwa feste Betriebsspannung, verbraucht hohe Ströme und weist einen motordrehzahlabhängigen Leistungsbedarf von mehreren Kilowatt auf. Zur Erzeugung elektrischer Energie in Kraftfahrzeugen werden Generatoren und Energiespeicher, z.B. Batterien, verwendet. Ausgangsspannung und Leistung eines Generators sind jedoch drehzahlabhängig. Weil im allgemeinen die von Generator und Batterie bereitgestellte elektrische Leistung und Spannung nicht in allen Drehzahlbereichen den Erfordernissen einer elektromagnetischen Ventilsteuerung genügen, ist zwischen elektromagnetischer Ventilsteuerung und Generator nebst Batterie eine spezielle Versorgungsschaltung zweckmäßig.

Zur Bereitstellung einer weitestgehend drehzahlunabhängigen Versorgungsspannung für Verbraucher elektrischer Energie in einem Kraftfahrzeug ist aus der US 5 097 165 ein Generatorsystem mit zwei Generatoren bekannt. Ein erster Generator dient zur Erzeugung einer ersten, niedrigen Ausgangsspannung, ein zweiter Generator erzeugt eine zweite, höhere Ausgangsspannung. Jedem Generator ist ein Spannungsregler zugeordnet, mittels dem der Strom in den Feldwicklungen der Generatoren gesteuert wird. Bei laufendem Motor und wechselnder Last kann so die Spannung in beiden Bordnetzen in etwa konstant gehalten werden.

Aus der DE 42 25 515 A1 ist eine Vorrichtung zur Erhöhung der Generatorausgangsspannung in einem Kraftfahrzeug bekannt. Indem die Ausgangsleitungen des Statorwickelsystems des Generators mittels Transistoren an Massepotentional schaltbar sind, kann bei Bedarf die Generatorausgangsspannung kurzfristig über Induktionsspannungsimpulse erhöht werden.

Die EP 0 390 398 B1 offenbart ein Anlaßsystem für einen Verbrennungsmotor, das einen DC/DC-Wandler zur Verstärkung der Batteriespannung unter Verwendung eines Speicherkondensators beinhaltet. Dieser Wandler umfaßt einen Transformator, dessen Primärspule einerseits mit dem Pluspol einer Batterie und andererseits über einen getakteten Transistorschalter mit Masse verbunden ist. Das Windungsverhältnis von Primärspule und Sekundärspule ist so festgelegt, daß dabei die Batteriespannung von 12 V auf 14 V gewandelt wird, um damit zu Beginn eines Anlaßvorgangs zunächst den Kondensator zu laden.

Der Erfindung liegt als technisches Problem die Bereitstellung einer Energieversorgungseinrichtung für eine elektromagnetische Ventilsteuerung eines Kraftfahrzeugs zugrunde, welche mit relativ geringem Aufwand realisierbar ist und die elektromagnetische Ventilsteuerung über den gesamten Drehzahlbereich der Brennkraftmaschine und auch beim Startvorgang ausreichend und effektiv mit elektrischer Energie versorgt.

Dieses Problem wird erfindungsgemäß durch eine Energieversorgungseinrichtung mit den Merkmalen des Anspruchs 1 oder 4 gelöst.

Bei der Energieversorgungseinrichtung gemäß Anspruch 1 ist parallel zu einer ersten Diodenanordnung, die als Anodenteil einer als Kathodenteil fungierenden zweiten Diodenanordnung gegenüberliegt, eine dritte Diodenanordnung vorgesehen, wobei ein elektrischer Energiespeicher mit dem Ausgang der dritten Diodenanordnung verbunden ist. Die Energieversorgungseinrichtung weist einen steuerbaren DC/DC-Wandler auf, der einerseits an die dritte Diodenanordnung und andererseits an den Versorgungsausgang für die elektromagnetische Ventilsteuerung angeschlossen ist.

Bei einer Energieversorgungseinrichtung gemäß Anspruch 4 ist der elektrische Energiespeicher mit dem Ausgang der ersten Diodenanordnung verbunden, und die Energieversorgungseinrichtung weist einen steuerbaren DC/DC-Wandler auf, der einerseits an den Ausgang der ersten Diodenanordnung und andererseits an den Versorgungsausgang für die elektromagnetische Ventilsteuerung angeschlossen ist, wobei dem DC/DC-Wandler eine Diode parallel geschaltet ist. Als Diodenanordnung bzw. Dioden sind vorliegend neben eigentlichen Diodenelementen z.B. auch POWER-MOS-Transistoren und andere Halbleiterschalter verwendbar.

Auf diese Weise wird eine kraftstoffsparende Energieversorgungseinrichtung geschaffen, die eine stabile Gleichspannungsversorgung für eine elektromagnetische Ventilsteuerung bereitstellt. Durch Steuern des DC/DC-Wandlers kann der elektromagnetischen Ventilsteuerung elektrische Energie aus dem Generator und/oder dem Energiespeicher zugeführt werden. Dadurch ist es möglich, in Motorkennfeldbereichen, in denen zur Erzeugung einer Überschußleistung zum Antrieb des Generators überproportional mehr Treibstoff benötigt wird oder in denen die sogenannte Muschelkurve des Generators, die dessen drehzahlabhängige Leistungscharakteristik beschreibt, ungünstig ist, mit dem Generator möglichst wenig elektrische Energie zu erzeugen und die elektromagnetische Ventilsteuerung weitestgehend aus dem Energiespeicher zu speisen, der eine oder mehrere Speichereinheiten beinhalten kann. Umgekehrt kann in zur Erzeugung von elektrischer Energie günstigen Motorkennfeldbereichen, d.h. in günstigen Muschelkurvenbereichen des Generators, mit dem Generator eine Überschußleistung erzeugt werden, um zusätzlich zur Speisung der elektromagnetischen Ventilsteuerung den bzw. die elektrischen Energiespeichereinheiten aufzuladen. Weiterhin kann auch im Normalbetrieb bei abgeschaltetem DC/DC-Wandler der Fluß in der Maschine abgeschwächt werden, um Wirbelstromverluste zu minimieren. Dennoch kann bei eingeschaltetem DC/DC-Wandler die elektromagnetische Ventilsteuerung versorgt werden.

Vorteilhafte Weiterbildungen der Erfindung sind in den Unteransprüchen angegeben.

Bevorzugte Ausführungsformen der Erfindung sind in den Zeichnungen dargestellt und werden nachfolgend beschrieben. Es zeigen:
- Fig. 1: ein Blockschaltbild einer ersten Ausführungsform der Energieversorgungseinrichtung für eine elektromagnetische Ventilsteuerung eines Kraftfahrzeuges und
- Fig. 2: ein Blockschaltbild einer zweiten Ausführungsform der Energieversorgungseinrichtung für eine elektromagnetische Ventilsteuerung eines Kraftfahrzeuges.

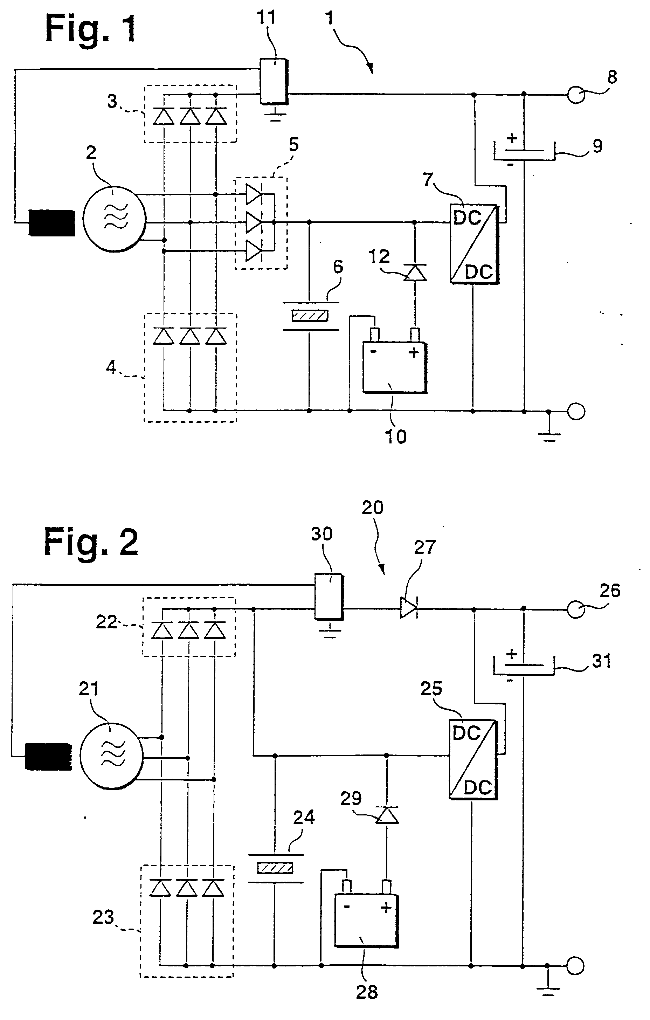

Die in Fig. 1 dargestellte Energieversorgungseinrichtung 1 beinhaltet einen Drehstromgenerator 2, dessen Ausgangsspannung durch eine Brückengleichrichterschaltung in B6U-Konfiguration mit einer ersten und einer zweiten Diodenanordnung 3 und 4 gleichgerichtet wird.

Ein Spannungsregler 11 herkömmlicher Bauart regelt die gleichgerichtete Generatorspannung am Ausgang der ersten Diodenanordnung 3 auf 40 V und liefert diese Spannung an einen Plus-Ausgang 8 der Energieversorgungseinrichtung 1, während die zweite Diodenanordnung nach Masse führt. Zwischen dem Plus-Ausgang 8 und dem Masseanschluß der Energieversorgungseinrichtung 1 ist ein Glättungskondensator 9 geschaltet, mittels dem die gepulste Stromaufnahme bewältigt wird und höhere Harmonische der Wechselspannungsfrequenz des Drehstromgenerators 2 weggedämpft werden, die sich ansonsten insbesondere im unteren Drehzahlbereich des Generators störend bemerkbar machen würden. Parallel zur ersten Diodenanordnung 3 ist eine dritte Diodenanordnung 5 mit Dioden geschaltet, die für geringere Ströme ausgelegt sind und die deshalb schon bei kleineren Generatorspannungen durchschalten als die Dioden der ersten und zweiten Diodenanordnungen 3 und 4. Der Ausgang der dritten Diodenanordnung 5 ist mit einer Seite eines steuerbaren DC/DC-Wandlers 7 verbunden, dessen andere Seite auf die Leitung vom Spannungsregler 11 zum Plus-Ausgang 8 gelegt ist. Zusätzlich ist an den Ausgang der dritten Diodenanordnung 5 ein Speicherkondensator 6 angeschlossen. Diesem Speicherkondensator 6 ist eine 12V-Bordbatterie 10 mit Schutzdiode 12 parallel geschaltet.

Beim Starten des Kraftfahrzeugs wird vor dem Betätigen eines ebenfalls aus der Bordbatterie 10 gespeisten Anlassers der Brennkraftmaschine, der in Fig. 1 nicht dargestellt ist, der Glättungskondensator 9 mit Strom aus der Bordbatterie 10 über den DC/DC-Wandler 7 auf eine Startbetriebspannung aufgeladen, die bei Bedarf, um möglichst viel elektrische Energie im Glättungskondensator 9 zu speichern, über der Betriebsspannung der elektromagnetischen Ventilsteuerung bei laufendem Motor von 40V liegen kann. Hat der Glättungskondensator 9 die Startbetriebspannung erreicht, so wird der Anlasser betätigt und gleichzeitig die elektromagnetische Ventilsteuerung kurzfristig mit Energie aus dem Glättungskondensator 9 betrieben. Über die zeitliche Verschiebung des Aufladens des Glättungskondensators 9 auf die Startbetriebspannung und des Betätigens des Anlassers wird beim Startvorgang eine Verringerung des Stromflusses aus der Bordbatterie 10 erreicht, was eine kleinere Baugröße der im Fahrzeug eingesetzten Bordbatterie 10 erlaubt.

In der Regel reicht bei Leerlauf der Brennkraftmaschine aufgrund der geringen Generatordrehzahl die im Generator induzierte Spannung noch nicht aus, die Brückengleichrichterschaltung aus erster und zweiter Diodenanordnung 3, 4 durchzuschalten. Jedoch kann bereits etwas Energie über die früher durchschaltende dritte Diodenanordnung 5 aus dem Generator entnommen werden. Die Versorgung der elektromagnetischen Ventilsteuerung wird in diesem Fall durch die mittels des DC/DC-Wandlers 7 hochtransformierte Spannung von der dritten Diodenanordnung 5 und/oder dem Speicherkondensator 6 bzw. der Bordbatterie 10 bewirkt, wobei der DC/DC-Wandler 7 Strom aus dem Generator 2 über die dritte Diodenanordnung 5 zieht, sobald die Generatorspannung höher ist als die Spannung der beiden Energiespeicher 6, 10. Dabei regelt der DC/DC-Wandler 7 die Spannung am Plus-Ausgang 8 unabhängig von der Spannung an Speicherkondensator 6 bzw. Bordbatterie 10 drehzahl- oder spannungsgeregelt auf den gewünschten Wert von z.B. 40V. Im übrigen kann über die dritte Diodenanordnung 5 bei ausreichend hoher Generatorspannung der Speicherkondensator 6 aus dem Generator 2 aufgeladen werden, wobei die Bordbatterie 10 durch die Schutzdiode 29 vor Überspannungen geschützt ist.

Bei Steigerung der Motordrehzahl reicht, wenn diese eine gewisse Einsatzdrehzahl erreicht, die Generatorspannung aus, auch die Dioden in der ersten und zweiten Diodenanordnung 3 und 4 durchzuschalten. Nach dem Erreichen einer Abregeldrehzahl kann der DC/DC-Wandler 7 abgeregelt werden, so daß die elektromagnetische Ventilsteuerung allein über die erste und zweite Diodenanordnung 3 und 4 nebst dem Spannungsregler 11 gespeist wird. Durch Steuern des DC/DC-Wandlers 7 als Funktion der Spannung am Plus-Ausgang 8 der Energieversorgungseinrichtung 1 oder der Motordrehzahl wird aufgrund des besseren Dynamikverhaltens eines DC/DC-Wandlers im Vergleich zu einem ungesteuerten Spannungsregler ein guter Ausgleich von Spannungsschwankungen am Plus-Ausgang 8 für die elektromagnetische Ventilsteuerung über einen weiten Drehzahlbereich hinweg bewirkt.

Um Gewicht zu sparen, ist es vorteilhaft, den Drehstromgenerator 2 möglichst klein zu dimensionieren. Wenn in diesem Fall die Leistung des Generators 2 im obersten Drehzahlbereich nicht mehr ausreicht, den von der elektromagnetischen Ventilsteuerung drehzahlabhängig linear steigenden Leistungsbedarf zu decken, kann über den steuerbaren DC/DC-Wandler 7 zusätzlich Strom für die elektromagnetische Ventilsteuerung aus der Bordbatterie 10 bzw. dem Speicherkondensator 6 geliefert werden, was einen Zusammenbruch der Spannung am Plus-Ausgang 8 der elektromagnetischen Energieversorgungseinrichtung verhindert.

Bei Einsatz der Energieversorgungseinrichtung 1 in einem Kraftfahrzeug kann diese eine Bremsenergierückgewinnung realisieren, indem der bremsende Generator 2 den Speicherkondensator 6 auflädt. Dabei wird der Speicherkondensator 6 über die dritte, z.B. mit steuerbaren Halbleiterventilen, wie Thyristoren, ausgestattete Diodenanordnung 5 aufgeladen. Bei einer bevorzugten bidirektionalen Ausführung des DC/DC-Wandlers 7 ist auch ein Aufladen aus dem Versorgungskreis für den Plus-Anschluß 8 der elektromagnetischen Ventilsteuerung möglich. Die Diode 12 kann hierbei zweckmäßigerweise durch einen MOS-Synchronisationsgleichrichter ersetzt werden.

Die abgespeicherte Bremsenergie kann dann anschließend über den DC/DC-Wandler 7 wieder direkt genutzt werden, um die elektromagnetische Ventilsteuerung allein oder unterstützend zu speisen. Bei Verwendung der Bremsenergie aus dem Speicherkondensator 6 wird der Generator 2 entsprechend geringer belastet. Aufgrund des hohen Leistungsbedarfes einer elektromagnetischen Ventilsteuerung im Bereich von einigen Kilowatt leert sich der Speicherkondensator 6 nach Beendigung des Bremsvorgangs relativ schnell und ist dann schon bei einem kurz darauf folgenden Bremsvorgang wieder aufnahmefähig. Durch diese Rückgewinnung von Energie kann Kraftstoff eingespart werden, weil der Generator bei Normalbetrieb im Durchschnitt weniger belastet wird und entsprechend weniger Gegenmoment an der Brennkraftmaschine hervorruft.

Es ist vorteilhaft, den DC/DC-Wandler 7 abhängig vom Motor- und Generatorkennfeld zu steuern. In Drehzahlbereichen, in denen die Brennkraftmaschine mit ungünstigerem Wirkungsgrad, also treibstoffintensiv arbeitet, wird der DC/DC-Wandler 7 so gesteuert, daß Energie aus dem Speicherkondensator 6 bzw. der Bordbatterie 10 in den Versorgungskreis für den Plus-Anschluß 8 wenigstens unterstützend eingespeist wird. Dadurch wird erreicht, daß sich aufgrund der geringeren Belastung des Generators das Gegenmoment, das er an der Brennkraftmaschine hervorruft, verringert. Umgekehrt wird der Speicherkondensator 6 in Drehzahlbereichen, in denen die Brennkraftmaschine mit gutem Wirkungsgrad, also treibstoffgünstig arbeitet, der DC/DC-Wandler 7 so gesteuert, daß er keine zusätzliche Energie in den Versorgungskreis für den Plus-Anschluß 8 einspeist und stattdessen der Speicherkondensator 6 über die dritte Diodenanordnung 5 auf den DC/DC-Wandler aufgeladen wird. Auf diese Weise wird treibstoffgünstig erzeugte Energie gespeichert, die zu einem späteren Zeitpunkt der elektromagnetischen Ventilsteuerung zugeführt werden kann. Ist der DC/DC-Wandler 7 bidirektional ausgeführt, so ist es wie erwähnt auch möglich, über ihn den Speicherkondensator 6 aus dem Versorgungskreis für den Plus-Anschluß 8 zu speisen.

Es ist auch möglich, zur Energieerzeugung den Generator 2 abhängig von seiner Leistungs-Muschelkurve zu belasten. Dazu wird in Drehzahlbereichen, in denen der Generator 2 mit hohem Wirkungsgrad elektrische Energie zu erzeugen vermag, aus ihm mehr Strom gezogen als die elektromagnetische Ventilsteuerung verbraucht. Die Überschußenergie wird im Speicherkondensator 6 abgespeichert. Auf diese Energie kann dann in Drehzahlbereichen des Generators 2 zurückgegriffen werden, in denen dieser einen niedrigeren Wirkungsgrad hat. Durch eine entsprechend geringere Belastung des Generators 2 oder gar ein Aussetzen desselben wird sein Gegenmoment am Verbrennungsmotor entsprechend verringert.

Die in Fig. 2 dargestellte Energieversorgungseinrichtung 20 für eine elektromagnetische ventilsteuerung eines Kraftfahrzeugs beinhaltet einen Drehstromgenerator 21, dessen Ausgangsspannung mittels einer ersten und einer zweiten Diodenanordnung 22 und 23, die eine Brückengleichrichterschaltung in B6U-Konfiguration bilden, gleichgerichtet wird. An diese Brückengleichrichterschaltung sind parallel ein Speicherkondensator 24 und eine 12V-Bordbatterie 28 mit Schutzdiode 29 angekoppelt. Die Spannung am Plus-Ausgang 26 der Energieversorgungseinrichtung 20 wird durch eine erste Seite eines steuerbaren DC/DC-Wandlers 25 auf z.B. 40V festgelegt. Auf seiner anderen Seite ist der DC/DC-Wandler an die erste Diodenanordnung 22 angeschlossen. Parallel zum DC/DC-Wandler 25 liegt im Strompfad von der ersten Diodenanordnung 22 zum Plus-Anschluß 26 ein ungesteuerter Spannungsregler 30 und eine Diode 27. Wie bei der in Fig. 1 dargestellten Energieversorgungseinrichtung ist zur Dämpfung aufmodulierter Wechseispannungen zwischen dem Plus-Anschluß 26 und dem Masseanschluß der Energieversorgungseinrichtung 20 ein Glättungskondensator 31 vorgesehen.

Zum Starten des Kraftfahrzeugs kann die Energieversorgungseinrichtung 20 entsprechend der Energieversorgungseinrichtung 1 von Fig. 1 betrieben werden. Die elektromagnetische Ventilsteuerung wird somit bei Leerlauf des Motors, wenn die Generatorspannung noch nicht ausreicht, die Dioden in den Diodenanordnungen 22 und 23 durchzuschalten, mit elektrischer Energie aus dem Speicherkondensator 24 und/oder der Bordbatterie 28 gespeist, die mit dem DC/DC-Wandler 25 auf die von der elektromagnetischen Ventilsteuerung benötigte Spannung gewandelt wird.

Wenn die Generatorspannung ausreicht, die Dioden in den Diodenanordnungen 22 und 23 durchzuschalten, kann die elektromagnetische Ventilsteuerung direkt aus dem Generator gespeist werden. Dabei wird, wenn der Leistungsbedarf der elektromagnetischen Ventilsteuerung die Generatorleistung übersteigt, das Zusammenbrechen der Spannung am Plus-Anschluß 26 der Energieversorgungseinrichtung 20 durch Zufuhr elektrischer Energie aus dem Speicherkondensator 24 bzw. der Batterie 28 über den steuerbaren DC/DC-Wandler 25 verhindert.

Wie bei der in Fig. 1 beschriebenen Energieversorgungseinrichtung 1 wirkt der DC/DC-Wandler 25 vom Spannungsregler 30 herrührenden Spannungsschwankungen ausgleichend entgegen, wenn er drehzahl- oder spannungsgeregelt eine gewünschte Spannung am Plus-Ausgang 26 der Energieversorgungseinrichtung 20 einregelt. Der Energieversorgungseinrichtung 1 aus Fig. 1 entsprechend ist es auch möglich, über den steuerbaren DC/DC-Wandler 25 bei hohen Drehzahlen, wenn die von der elektromagnetischen Ventilsteuerung benötigte Leistung das Leistungsvermögen des Generators 21 übersteigt, Strom in den Versorgungskreis für den Plus-Anschluß 26 einzuspeisen. Auch kann in den Speicherkondensator 24 Bremsenergie gespeichert oder dieser motorkennfeldabhängig bzw. muschelkurvenabhängig aufgeladen werden, wie dies zu Fig. 1 erläutert wurde.

Es sei bemerkt, daß bei den beiden in Fig. 1 und 2 dargestellten Energieversorgungseinrichtungen 1 bzw. 20 für eine elektromagnetische Ventilsteuerung ein Generatorausfall nicht einen Ausfall der elektromagnetischen Ventilsteuerung nach sich ziehen muß, weil diese eben auch aus der Batterie 10 bzw. 28 bzw. dem Speicherkondensator 5 bzw. 24 gespeist werden kann. Auch ist es bei beiden Formen der Energieversorgungseinrichtung 1 bzw. 20 möglich, die Funktion der Batterieschutzdioden 12 bzw. 29 in den DC/DC-Wandler 7 bzw. 25 zu integrieren, so daß durch ihn bei Bremsvorgängen nicht nur der Speicherkondensator 6 bzw. 24, sondern auch die Batterie 10 bzw. 28 aufgeladen wird.

## Patentansprüche

1. Energieversorgungseinrichtung für eine elektromagnetische Ventilsteuerung einer Brennkraftmaschine, insbesondere eines Kraftfahrzeugs, mit
- einem mechanisch mit der Brennkraftmaschine koppelbaren Generator (2),
- einer dem Generator (2) zugeordneten Gleichrichterschaltung, die eine erste Diodenanordnung (3) als Anodenteil und eine zweite Diodenanordnung (4) als Kathodenteil umfaßt und mit der ein Versorgungsausgang (8) verbunden ist, und
- einem elektrischen Energiespeicher (6),
**dadurch gekennzeichnet, daß**
- der elektrische Energiespeicher (6) mit dem Ausgang einer dritten Diodenanordnung (4), die ein zweites Anodenteil bildet und der ersten Diodenanordnung parallel geschaltet ist, verbunden ist und
- die Energieversorgungseinrichtung (1) einen steuerbaren DC/DC-Wandler (7) aufweist, der einerseits an die dritte Diodenanordnung (5) und andererseits an den Versorgungsausgang (8) angeschlossen ist.

2. Energieversorgungseinrichtung gemäß Anspruch 1,
**dadurch gekennzeichnet, daß**
die Dioden der dritten Diodenanordnung (5) bei geringeren Durchlaßspannungen leitend sind als die Dioden der ersten Diodenanordnung (3, 4).

3. Energieversorgungseinrichtung gemäß Anspruch 1 oder 2,
**dadurch gekennzeichnet, daß**
den Dioden der ersten Diodenanordnung (3) ein Spannungsregler (11) nachgeschaltet ist.

4. Energieversorgungseinrichtung für eine elektromagnetische Ventilsteuerung einer Brennkraftmaschine, insbesondere eines Kraftfahrzeugs, mit
- einem mechanisch mit der Brennkraftmaschine koppelbaren Generator (21),
- einer dem Generator (21) zugeordneten Gleichrichterschaltung, die eine erste Diodenanordnung (22) als Anodenteil und eine zweite Diodenanordnung (23) als Kathodenteil umfaßt und mit der ein Versorgungsausgang (26) verbunden ist, und
- einem elektrischen Energiespeicher (24),
**dadurch gekennzeichnet, daß**
- der elektrische Energiespeicher (24) mit dem Ausgang der ersten Diodenanordnung (22) verbunden ist und
- die Energieversorgungseinrichtung (20) einen steuerbaren DC/DC-Wandler (25) aufweist, der einerseits parallel zum Energiespeicher (24) an den Ausgang der ersten Diodenanordnung (22) und andererseits an den Versorgungsausgang (26) angeschlossen ist,
- wobei dem DC/DC-Wandler (25) eine Diode (27) parallel geschaltet ist.

5. Energieversorgungseinrichtung gemäß Anspruch 4,
**dadurch gekennzeichnet, daß**
die Diode (27) zusammen mit einem ihr vorgeschalteten Spannungsregler (30) dem DC/DC-Wandler (25) parallel geschaltet ist.

6. Energieversorgungseinrichtung gemäß einem der Ansprüche 1 bis 5,
**dadurch gekennzeichnet, daß**
der Energiespeicher durch eine Batterie (10, 28) und einen Speicherkondensator (6, 24), die parallel geschaltet sind, gebildet ist.

7. Energieversorgungseinrichtung gemäß Anspruch 6,
**dadurch gekennzeichnet, daß**
die Anode der Batterie (10, 28) mittels einer Schutzdiode (12, 29) gesichert ist.

8. Energieversorgungseinrichtung gemäß wenigstens einem der vorherigen Ansprüche,
**dadurch gekennzeichnet, daß**
der DC/DC-Wandler (7, 25) bidirektional betreibbar ist, wobei er in Betriebsphasen mit zu geringer Generatorleistung dem Versorgungsausgang Energie vom Energiespeicher zuführt und in Betriebsphasen mit überschüssiger Generatorleistung Energie in den Energiespeicher rückspeist.
